# EUROPEAN PATENT APPLICATION

(11) **EP 3 892 488 A1**
(43) Date of publication of application: **13.10.2021**
(21) Application number: 21167093.0
(22) Date of filing: 07.04.2021
(51) Int. Cl.: B60K 23/00, G05G 1/405, G05G 1/42, B60K 23/02

(54) **PEDAL POSITION ADJUSTING MECHANISM**

(30) Priority: 09.04.2020 IT 202000007639
(71) Applicant: Plastic Components and Modules Automotive S.p.A., 10137 Torino (TO) (IT)
(72) Inventor: MILETTO, Beniamino, I-10137 TORINO (IT); CAVAGLIA', Renato Antonio, I-10137 TORINO (IT)
(74) Representative: Savoca, Agatino

(57) **Abstract**

The mechanism (10) for adjusting the angular position of a pedal (PI; P2) of a vehicle comprises: a motor (12) for generating a rotary motion and transmitting it to at least one rotating member (20a; 32a); a first pedal assembly (14) comprising a first support frame (18) with a first slotted hole (24), rotatably supported on a first fulcrum (Fl) and adapted to support a first pedal (PI); a first motion conversion mechanism (20), comprising a first rotating member (20a) rotatable about a first axis of rotation (zl) and a first translating member (20b), configured to receive a rotational motion and to convert it into a translational motion; and a first pin (22), arranged for joint translation with said first translating member (20b) and arranged to slide inside said first slotted hole (24), whereby the sliding of the first pin (22) within said first slotted hole (24) draws the first support frame (18) in rotation about the first fulcrum (Fl) between a first angular position and a second angular position; and a second pedal assembly (28) similar to the first, wherein the first rotating member (20a) of the first motion conversion mechanism (20) is connected to the motor (12) to receive its rotary motion and the second rotating member (32a) of the second motion conversion mechanism (32) is connected in rotation to the first rotating member (20a) through a flexible transmission (40).

## Description

This invention generally relates to an adjusting mechanism for adjusting the angular position of an assembly of pedals of a vehicle.

In order to ensure maximum comfort for the driver, steering wheel or seat adjustment systems are generally known which are suitable for modifying the relative position of the driver with respect to the driving commands, in particular with respect to the steering wheel and with respect to the pedals, such as, for example, sliding adjustment systems in which the steering wheel or seat is mounted slidably on respective rails.

However, by adjusting the position of the seat only or the steering wheel only it is not possible to take into account differences in height of drivers or the size of the legs and feet. This means that, by adjusting the position of the seat or the steering wheel, an optimal and safe position of the driver's foot on the pedal is not always ensured, nor is sufficient space ensured for the mobility of the driver's legs. Naturally, this adversely affects the safety and accuracy of the command given by the driver to the pedals.

There are different types of devices on the market including a motor, which, with suitable return mechanisms, moves a pedal to the desired position.

An object of this invention is to provide an alternative adjusting mechanism for adjusting the relative position of the driver with respect to the pedals, and in particular for adjusting the angular position of a first and a second pedal of a vehicle which does not suffer from the drawbacks of the prior art.

This and other objects are fully achieved according to this invention by an adjusting mechanism as defined in the appended independent claim 1.

Advantageous embodiments of the invention are specified in the dependent claims, the content of which is to be understood as an integral and integrating part of the following description.

In short, the invention is based on the idea of providing an adjusting mechanism for adjusting the angular position of a pedal of a vehicle, the adjusting mechanism comprising:
a motor configured to generate a rotary motion and to transmit it to at least one rotating member;
a first pedal assembly comprising:
   - a first support frame, rotatably supported on a first fulcrum and adapted to support a first pedal, said first support frame having a respective first slotted hole;
   - a first motion conversion mechanism, comprising a first rotating member rotatable about a first axis of rotation and a first translating member, the first motion conversion mechanism being configured to receive a rotary motion transmitted from the motor to the first rotating member and to convert it into a translational motion of the first translating member; and
   - a first pin arranged for joint translation with said first translating member and arranged to slide within said first slotted hole, whereby the sliding of the first pin inside said first slot draws the first support frame in rotation about the first fulcrum between a first angular position and a second angular position; and
a second pedal assembly, comprising:
   - a second support frame, rotatably supported on a second fulcrum and adapted to support a second pedal, the second support frame having a respective second slotted hole;
   - a second motion conversion mechanism comprising a second rotating member rotatable about a second axis of rotation and a second translating member, the second motion conversion mechanism being configured to receive a rotary motion transmitted by the motor to the second rotating member and to convert it into a translational motion of the second translating member; and
   - a second pin, arranged for joint translation with said second translating member and arranged to slide inside said second slotted hole, whereby the sliding of the second pin inside said second slotted hole draws the second support frame in rotation about the second fulcrum between a first angular position and a second angular position,
   and wherein the first rotating member of the first motion conversion mechanism is connected to the motor to receive the rotary motion thereof, and the second rotating member of the second motion conversion mechanism is rotatably connected to the first rotating member via a flexible transmission.

Preferably, each motion conversion mechanism comprises a respective endless screw and a respective scroll slidably mounted thereon.

Advantageously, the adjusting mechanism is provided with at least one position sensor adapted to detect at least one of: a position of a pin, a position of a translating member of a motion conversion mechanism, and/or an angular position of a support frame or a rotating member of the motion conversion mechanism.

By virtue of such an adjusting mechanism, it is possible to overcome the drawbacks of the prior art mentioned above.

Further features and advantages of this invention will be clarified by the detailed description that follows, given purely by way of non-limiting example in reference to the accompanying drawings, wherein:
Fig. 1 is a side view of an adjusting mechanism according to a first embodiment of the invention in a first position;
Fig. 2 is a side view of the adjusting mechanism of Fig. 1 in a second position;
Fig. 3 is a perspective view of an adjusting mechanism according to a second embodiment of the invention;
Fig. 4 is a side view of a part of the adjusting mechanism of Fig. 3; and
Fig. 5 is a side view showing the main components of an assembly comprising the adjusting mechanism of Fig. 1 mounted on a support plate.

An adjusting mechanism for adjusting the angular position of a pedal is generally indicated in the figures with the reference number 10.

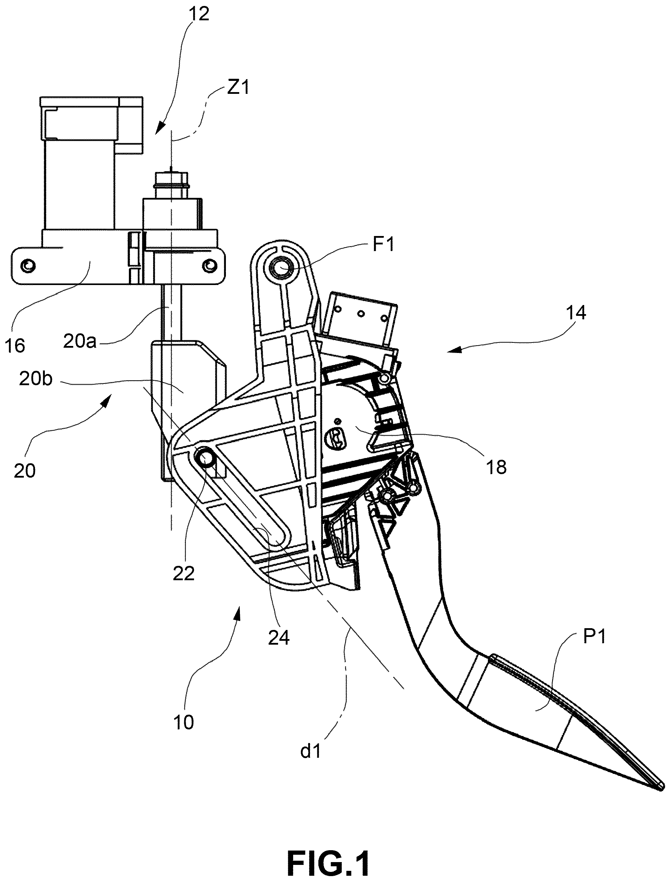

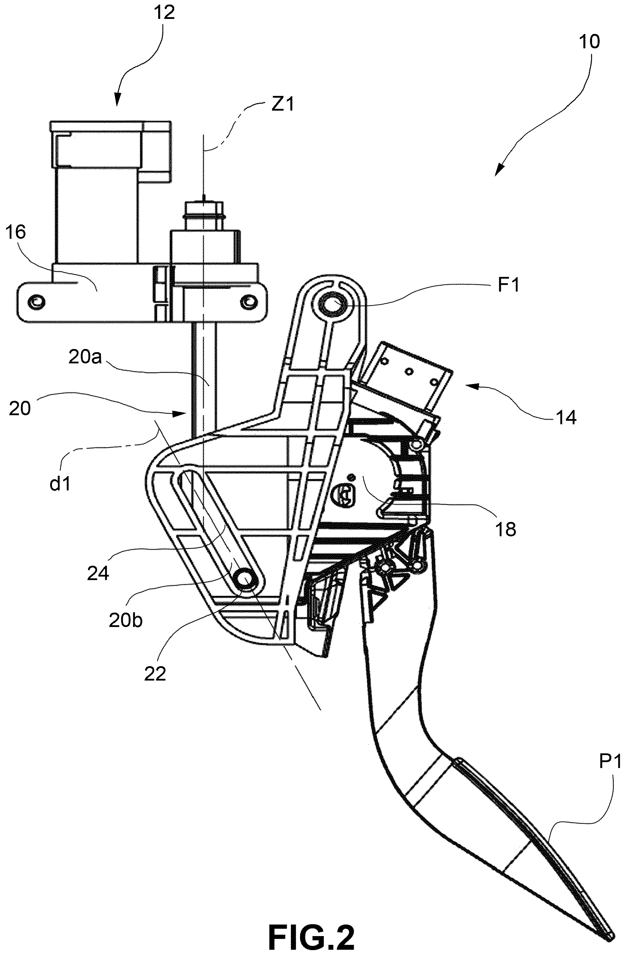

With reference initially to Fig. 1 and 2, according to a first embodiment of the invention, an adjusting mechanism 10 essentially comprises a motor 12, a first pedal assembly 14 and a second pedal assembly 28.

The motor 12 is configured, in a known way, to generate a rotary motion and transmit it to a rotating member arranged, for example, at an output shaft of the motor 12. The motor 12 may, for example, be an electric motor. The motor 12 may be associated, in a manner known per se, with a gear reduction assembly 16 adapted to multiply the torque delivered by the motor 12 according to the dimensional requirements of the design of the adjusting mechanism 10. Preferably, the motor 12 and the gear reduction assembly 16 are made as a single assembly, so that the adjusting mechanism 10 comprises a gear motor assembly, in a manner known per se.

The first pedal assembly 14 essentially comprises a first support frame 18, a first motion conversion mechanism 20 and a first pin 22.

The first support frame 18 is adapted to support a first pedal P1, which is mounted thereon in a manner known per se. The first pedal P1 is a conventional automotive control pedal, such as an accelerator control pedal, brake control pedal, or clutch control pedal. For the purposes of this description, the case will be presented wherein only one pedal is mounted on the first support frame 18; however, the invention is not limited to this embodiment, as the first support frame 18 may also support a plurality of side-by-side pedals, such as a brake pedal and an accelerator pedal.

The first support frame 18 is rotatably supported on a first fulcrum F1 so as to be able to rotate about said fulcrum between a first angular position and a second angular position.

A first slotted hole 24 is formed on the first support frame 18. The first slotted hole 24 is made as a through hole, preferably with an elongated cross section extending at least partially along a first extension direction d1.

The first motion conversion mechanism 20 comprises a first rotating member 20a, rotatable about a first axis of rotation z1, and a first translating member 20b. In a manner known per se, the first motion conversion mechanism 20 is adapted to receive a rotary motion transmitted by the motor 12 to the first rotating member 20a and to convert it into a translational motion of the first translating member 20b.

According to a preferable embodiment of the invention, the first rotating member 20a is made as a first endless screw 20a and the first translating member 20b is made as a first scroll 20b, which meshes with the first endless screw 20a and is adapted to translate axially along the first endless screw 20a between a first position and a second position in response to a rotation of the first endless screw 20a about the first axis of rotation z1, caused by a rotary motion received by the motor 12 and transmitted to said first scroll 20b.

The first pin 22 is arranged inserted within said first slotted hole 24. The first pin 22 has a generally rod-like shape, i.e., a simple cylinder, and is arranged for joint translation with said first translating member 20b.

The shape of the first slotted hole 24 and its arrangement on the first support frame 18 are such that, when the first translating member 20b and the first pin 22 translate along the first slotted hole 24 following the cross section thereof, the first support frame 18 is rotated about its first fulcrum F1 between the first angular position and the second angular position. In particular, when the motor 12 transmits a driving torque to the first motion conversion mechanism 20, and in particular transmits a rotary motion to the first rotating member 20a, said motion is converted into a translational motion of the first translating member 20b, and, consequently, of the first pin 22 along the first slotted hole 24. In this way, the motor 12 may control, by generating a drive torque in one direction or the other, the angular position of the first support frame 18, and, consequently, of the first pedal P1 mounted thereon.

In particular, the first extension direction d1 of the first slotted hole 24 is such as not to be parallel with the first axis of rotation z1, and not to pass through the first fulcrum F1. Alternatively, it is also possible for the cross section of the first slotted hole 24 to be different, i.e., it could extend along an at least partially non-rectilinear path, for example curvilinear, in particular S-shaped or arched, so as to define a plurality of different angular positions of the first support frame 18.

The adjusting mechanism 10 may also further comprise a first position sensor 26, adapted to determine the angular position of the first pedal P1 by detecting a correlated position. For example, the first position sensor 26 may be configured to detect the position of the first pin 22 inside the first slotted hole 24, or to detect the axial position of the first translating member 20b, or even to detect the angular position of the first rotating member 20a, of an output shaft of the motor 12, or of the first support frame 18.

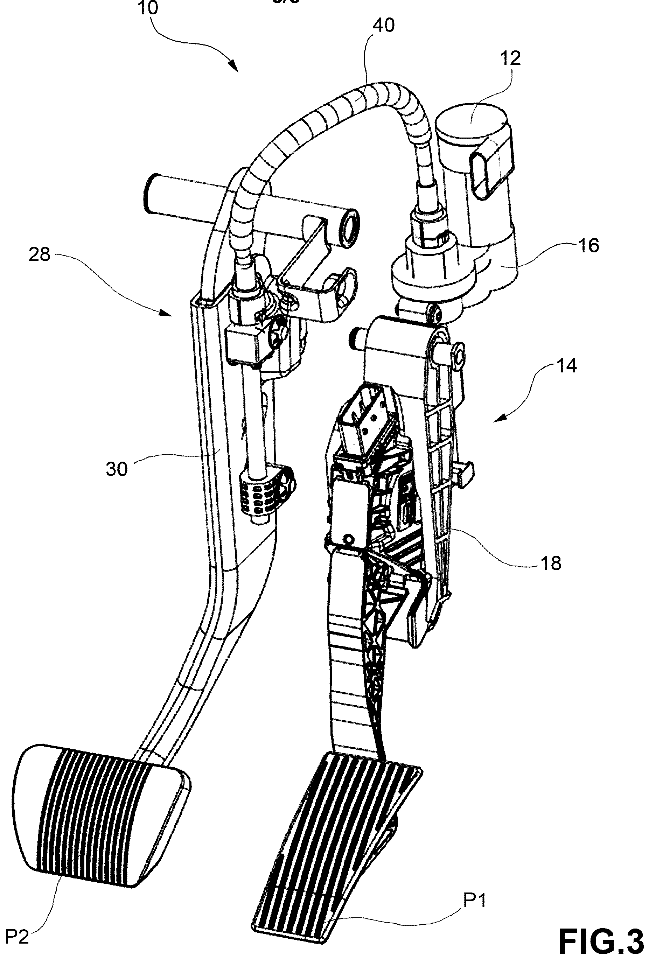

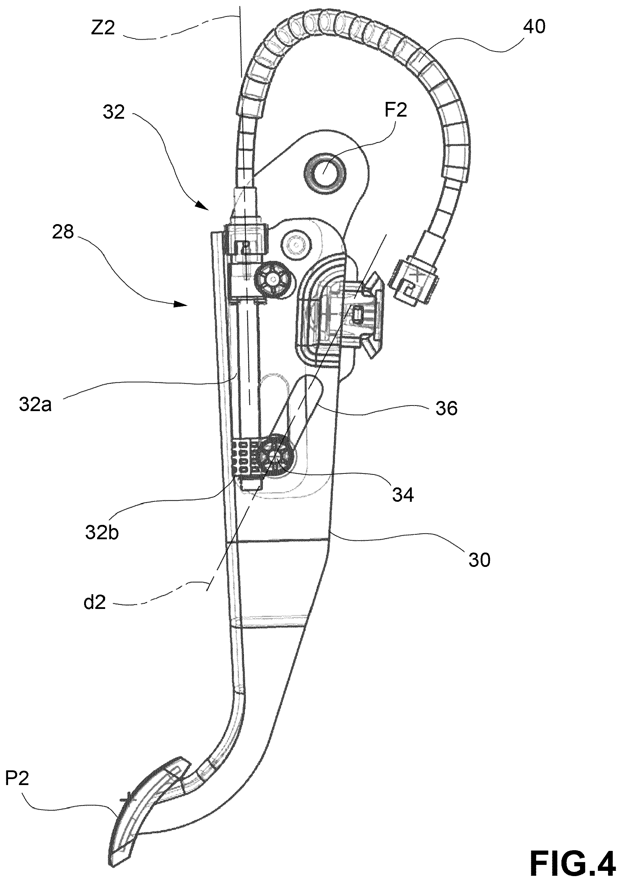

With reference now also to Fig. 3 and 4, wherein an embodiment of the invention is shown, an adjusting mechanism 10 further comprises a second pedal assembly 28.

The second pedal assembly 28 is made in a very similar way to the first pedal assembly 14 and is shown isolated in Fig. 4.

The second pedal assembly 28 essentially comprises a second support frame 30, a second motion conversion mechanism 32 and a second pin 34.

The second support frame 30 is adapted to support a second pedal P2, which is mounted thereon in a manner known per se. The second pedal P2 is also a conventional automotive control pedal, such as an accelerator control pedal, brake control pedal, or clutch control pedal. For the purposes of this description, the case will be presented wherein only one pedal is mounted on the second support frame 30, but the invention is not limited to this embodiment, as the second support frame 30 may also support a plurality of side-by-side pedals, such as, for example, a clutch control pedal and a brake control pedal.

The second support frame 30 is rotatably supported on a second fulcrum F2 so as to be able to rotate about said fulcrum between a first angular position and a second angular position.

Both the first support frame 18 and the second support frame 30 (or any further support frames) are preferably made by means of a plastic injection process, or alternatively by means of a sheet metal pressing process.

Similar to that which has been described with respect to the first support frame 18, a second slotted hole 36 is formed on the second support frame 30. The second slotted hole 36 is made as a through hole, preferably with an elongated cross section extending at least partially along a second extension direction d2.

The second motion conversion mechanism 32 comprises a second rotating member 32a, rotatable about a second axis of rotation z2, preferably parallel to the first axis of rotation z1, and a second translating member 32b. In a manner known per se, the second motion conversion mechanism 32 is adapted to receive a rotary motion transmitted by the motor 12 to the second rotating member 32a and to convert it into a translational motion of the second translating member 32b.

According to a preferable embodiment of the invention, the second rotating member 32a is made as a second endless screw 32a, and the second translating member 32b is made as a second scroll 32b, which meshes with the second endless screw 32a and is adapted to translate axially along the second endless screw 32a between a first position and a second position in response to a rotation of the second endless screw 32a about the second axis of rotation z2, caused by a rotary motion received from the motor 12 and transmitted to said second scroll 32b, even indirectly.

In effect, while the first rotating member 20a of the first motion conversion mechanism 20 is connected to the motor 12 to receive its rotational motion, the second rotating member 32a of the second motion conversion mechanism 32 is rotatably connected to the first rotating member 20a by means of a flexible transmission 40.

The connection between the first rotating member 20a and the second rotating member 32a allows the combined and simultaneous rotation of the two members and, therefore, of the first pedal assembly 14 and of the second pedal assembly 28, whereby the angular distance between the first pedal P1 and the second pedal P2 does not change.

In one embodiment it is also possible to make the connection between the first rotating member 20a and the second rotating member 32a in such a way that the rotation of the two members is simultaneous but differentiated, for example according to a logic of proportionality so that each angle of rotation of the angular position of the first pedal P1 corresponds to a certain quantity (greater or lesser) of an angle of rotation of the angular position of the second pedal P2, or according to a different logic predetermined by design.

The second pin 34 is arranged inserted inside said second slotted hole 36. The second pin 34 has a generally rod-like shape, i.e., a simple cylinder, and is arranged for joint translation with with said second translating member 32b.

The shape of the second slotted hole 36 and its arrangement on the second support frame 30 are such that, when the second translating member 32b and the second pin 34 translate along the second slotted hole 36 following its cross section, the second support frame 30 is drawn in rotation about its second fulcrum F2 between the first angular position and the second angular position. In particular, when the motor 12 transmits-even indirectly-a driving torque to the second motion conversion mechanism 32, and in particular transmits a rotary motion to the second rotating member 32a, said motion is converted into a translational motion of the second translating member 32b and, consequently, of the second pin 34 along the second slotted hole 36. In this way, the motor 12 may control, by generating a driving torque in one direction or the other, the angular position of the second support frame 30, and, consequently, of the second pedal P2 mounted thereon.

In particular, the second extension direction d2 of the second slotted hole 36 is arranged so as to be non-parallel to the second axis of rotation z2, and not to pass through the second fulcrum F2. Alternatively, it is also possible for the cross section of the second slotted hole 36 to be different, i.e., it could extend along an at least partially non-rectilinear path, for example curvilinear, in particular S-shaped or arched, so as to define a plurality of different angular positions of the second support frame 30. Preferably, the cross section of the first slotted hole 24 and the cross section of the second slotted hole 36 are the same.

The adjusting mechanism 10 may also further comprise a second position sensor 38, adapted to determine the angular position of the second pedal P2 by detecting a correlated position. For example, the second position sensor 38 may be configured to detect the position of the second pin 34 inside the second slotted hole 36, or to detect the axial position of the second translating member 32b, or even to detect the angular position of the second rotating member 32a of an output shaft of the motor 12, or of the second support frame 30.

Naturally, as is clear to those skilled in the art, the adjusting mechanism 10 according to the invention may comprise an even greater number of pedal assemblies, for example three pedal assemblies, made in a similar way to the first pedal assembly 14 and to the second pedal assembly 28 and comprising similar components connected together in a similar manner to the connection between the first pedal assembly 14 and the second pedal assembly 28, and each pedal assembly for which the angular position is adjusted may also support a plurality of pedals mounted integrally thereto.

For controlling the motor 12, the adjusting mechanism 10 may further comprise an electronic control unit ECU configured to control the generation of drive torque by the motor 12 in one direction of rotation or the other according to the required angular position of the controlled pedal. For example, the electronic control unit may be configured to control the activation of the motor 12 as a function of a command given by the driver or as a function of a position signal, for example generated by the first position sensor 26 or by the second position sensor 38.

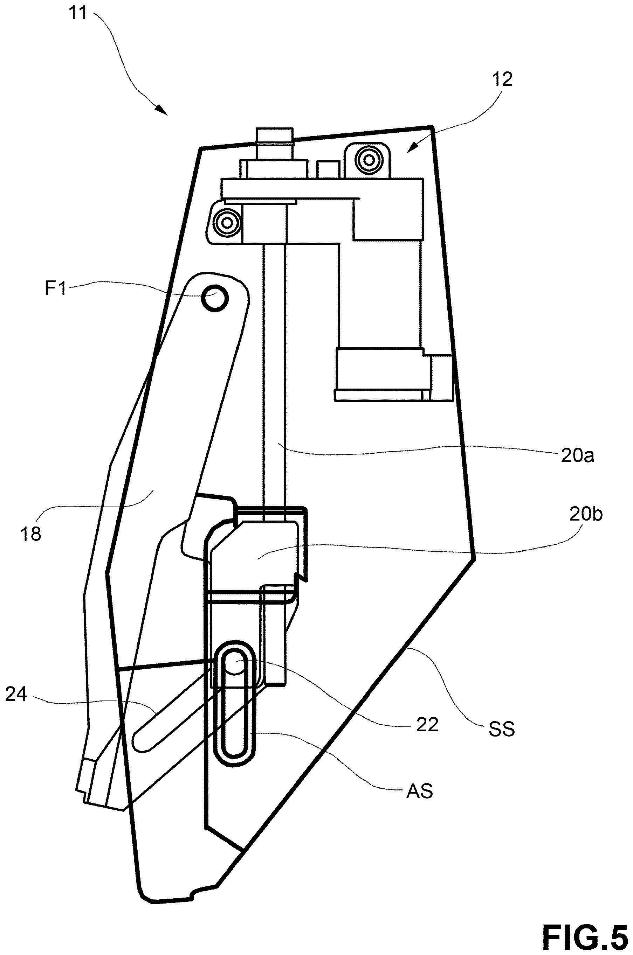

Fig. 5 shows in its main parts an assembly 11 for a vehicle substantially comprising the adjusting mechanism 10 according to the invention, wherein the first pedal P1 and a support structure SS are also visible. The first support frame 18 is mounted supported on a support structure SS, integral with a vehicle frame. The second support frame 30 is also mounted in a similar way.

The support structure SS has a guide slotted hole AS inside of which the first pin 22 and the second pin 34 are slidably arranged. In this way, during the sliding of the first pin 22 inside the first slotted hole 24 and of the second pin 34 inside the second slotted hole 36, said first pin 22 and second pin 34 also slide inside said guide slotted hole AS. This allows the first pin 22 and the second pin 34 to be guided in the best possible way, and to avoid any deformation of the components that transmit the motion up to the first pin 22 and up to the second pin 34. The second pedal assembly 28 is mounted in a similar way to the first pedal assembly 16 with respect to the support structure SS.

As is evident from the description provided above, an adjusting mechanism according to this invention provides several advantages.

First of all, by virtue of the use of an adjusting mechanism according to the invention it is possible to jointly control the angular position of several pedals of a vehicle in a manner completely independent from the position of the seat or of the steering wheel. Furthermore, by virtue of the use of a motor, it is possible to adjust this angular position effortlessly even in the case of a disabled driver or a driver with motor difficulties.

Lastly, by virtue of the use of a motion conversion mechanism as described, and in particular through the appropriate dimensioning of the pitch of the rotating member, the angular position of the first and of the second controlled pedal is ensured irreversibly and is securely fixed with respect to the driver's foot.

Finally, one of the distinctive advantages of the invention is the simplicity of the technical solution, which allows easy assembly, as well as the possibility of producing the actuation system in a modular way (motor assembly, or gearmotor, and one or more motion conversion mechanisms).

Naturally, without prejudice to the principle of the invention, the embodiments and the details of construction may be widely varied with respect to that which has been described and illustrated purely by way of non-limiting example, without thereby departing from the scope of the invention defined in the appended claims.

## Claims

1. Adjusting mechanism (10) for adjusting the angular position of a pedal (PI; P2) of a vehicle, the adjusting mechanism (10) comprising:
a motor (12) configured to generate a rotary motion and to transmit it to at least one rotating member (20a; 32a); and
a first pedal assembly (14) comprising
- a first support frame (18), rotatably supported on a first fulcrum (F1) and adapted to support a first pedal (PI), said first support frame (18) having a respective first slotted hole (24);
- a first motion conversion mechanism (20), comprising a first rotating member (20a), rotatable about a first axis of rotation (z1), and a first translating member (20b), the first motion conversion mechanism (20) being configured to receive a rotary motion transmitted from the motor (12) to the first rotating member (20a) and to convert it into a translational motion of the first translating member (20b); and
- a first pin (22), arranged for joint translation with said first translating member (20b) and slidable inside said first slotted hole (24), in such a way that the sliding of the first pin (22) inside said first slotted hole (24) draws the first support frame (18) in rotation about the first fulcrum (F1) between a first angular position and a second angular position, and
a second pedal assembly (28), comprising
- a second support frame (30), rotatably supported on a second fulcrum (F2) and adapted to support a second pedal (p2), the second support frame (30) having a respective second slotted hole (36);
- a second motion conversion mechanism (32), comprising a second rotating member (32a) rotatable about a second axis of rotation (z2) and a second translating member (32b), the second motion conversion mechanism (32) being configured to receive a rotary motion transmitted from the motor (12) to the second rotating member (32a) and to convert it into a translational motion of the second translating member (32b); and
- a second pin (34), arranged for joint translation with said second translating member (32b) and arranged slidable inside said second slotted hole (36), in such a way that the sliding of the second pin (34) inside said second slotted hole (36) draws the second support frame (30) in rotation about the second fulcrum (F2) between a first angular position and a second angular position,
and wherein the first rotating member (20a) of the first motion conversion mechanism (20) is connected to the motor (12) so as to receive the rotary motion, and the second rotating member (32a) of the second motion conversion mechanism (32) is rotatably connected with the first rotating member (20a) by means of a flexible transmission (40).

2. Adjusting mechanism according to claim 1 wherein the first rotating member (20a) is made as a first endless screw (20a); and wherein the first translating member (20b) is made as a first scroll (20b) engaging with the first endless screw (20a) and adapted to translate axially along the first endless screw (20a) between a first position and a second position in response to a rotation of the first endless screw (20a) about the first axis of rotation (z1).

3. Adjusting mechanism according to claim 1 or claim 2, wherein the second rotating member (32a) is made as a second endless screw (32a); and wherein the second translating member (32b) is made as a second scroll (32b) engaging with the second endless screw (32a) and adapted to translate axially along the second endless screw (32a) between a first position and a second position in response to a rotation of the second endless screw (32a) about the second axis of rotation (z2).

4. Adjusting mechanism according to any of the preceding claims, wherein said first slotted hole (24) has an elongated cross section extending at least partially along a first extension direction (d1) non-parallel with the first axis of rotation (z1).

5. Adjusting mechanism according to any of the preceding claims, wherein said second slotted hole (36) has an elongated cross section extending at least partially along a second extension direction (d2) non-parallel with the second axis of rotation (z2).

6. Adjusting mechanism according to any of the preceding claims, further comprising a first position sensor (26) adapted to detect at least one among: an angular position of an output shaft of the motor (12), an angular position of the first rotating member (20a), a position of the first pin (22), a position of the first translating member (20b), and/or an angular position of the first support frame (18).

7. Adjusting mechanism according to any of the preceding claims, further comprising a second position sensor (38) adapted to detect at least one among: an angular position of an output shaft of the motor (12), an angular position of the second rotating member (32a), a position of the second pin (34), a position of the second translating member (32b), and/or an angular position of the second support frame (30).

8. Assembly (11) for a vehicle, comprising:
an adjusting mechanism (10) according to any of the preceding claims;
a first pedal (PI) supported on said first support frame (18); and
a support structure (SS) arranged integral with a frame of the vehicle;
wherein the support structure (SS) supports the motor (12) and the first fulcrum (F1), and
wherein the support structure (SS) has a guide slotted hole (AS), wherein the first pin (22) is further arranged slidable inside said guide slotted hole (AS).

9. Assembly (11) according to claim 8, wherein the adjusting mechanism (10) is an adjusting mechanism (10) according to any of claims from 1 to 8, wherein the assembly (11) further comprises:
a second pedal (P2) supported on said second support frame (30);
wherein the support structure (SS) supports the motor (12) and the second fulcrum (F2), and
wherein the second pin (34) is further arranged slidable inside said guide slotted hole (AS).
